# EUROPEAN PATENT SPECIFICATION

(11) **EP 4 119 003 B1**
(45) Date of publication and mention of the grant of the patent: **11.09.2024**
(21) Application number: 21185908.7
(22) Date of filing: 15.07.2021
(51) Int. Cl.: A47B 47/03, A47B 47/05, A47B 96/06, A47B 96/14, F16B 12/32, E04F 13/08

(54) **FURNISHING ITEM AND ITS USE**
EINRICHTUNGSGEGENSTAND UND DESSEN VERWENDUNG
ARTICLE D'AMEUBLEMENT ET SON UTILISATION

(43) Date of publication of application: 18.01.2023
(73) Proprietor: Navona GmbH & Co. KG, 36088 Hünfeld (DE)
(72) Inventor: Most, Marco, 36088 Hünfeld (DE)
(74) Representative: Aera A/S

(56) References cited:
- FR-A- 1 480 683
- GB-A- 2 505 011
- US-A1- 2016 017 595
- US-B1- 6 226 947
- US-B2- 8 998 009

## Description

The present invention concerns a furnishing item and the use of it, specifically according to the independent claims.

Furnishing items or furnishings can be furniture. Conventionally the term furniture refers to movable objects intended to support various human activities such as seating (e.g., chairs, stools, and sofas), eating (tables), and sleeping (e.g., beds). Furniture is also used to hold objects at a convenient height for work (as horizontal surfaces above the ground, such as tables and desks), or to store things (e.g., cupboards and shelves). However, furnishing items in the sense of the present invention may also be walls, e.g. built up like drywalls.

Commercially available furniture for kitchens, bathrooms or living rooms according to the prior art are made up of a cabinet corpus. They usually consist of at least two side parts, a bottom part, a top part, a back wall and doors or drawers at the front. These parts are assembled together to build up the corpus. Such furniture is normally delivered disassembled, which means an immense transport volume, difficult handling into home and a high risk of damage during transport. Kits are delivered to the customer in all their individual parts and are sometimes very complicated and timeconsuming to assemble. Modular furniture systems are delivered partially assembled, but consist largely of identical parts, which often cannot be changed at will.

The disadvantage of all the above-mentioned furniture concepts is the fact that the individual parts like side, bottom, back and top parts forming the corpus have to be assembled together in order to achieve stability. Another disadvantage is the fact that after the purchase a flexible extension or reduction of the furniture is not possible or only possible with a very high effort. A third disadvantage is the fact that the relevant decorations visible on the outside are usually not interchangeable, as they are part of the static whole corpus of the furniture. A fourth disadvantage comes into play when a part has to be replaced due to damage, which is not possible or only possible at very high cost with conventional furniture, especially if the furniture is older and not produced anymore.

US 8 998 009 B2 and FR 1 480 683 A disclose a wall assembly for goods display constituted by horizontal tracks fixed to a wall body and disposed in a lateral direction at equal intervals, vertical posts disposed on the horizontal tracks and disposed in a vertical direction at equal intervals, an interval adjustment unit configured to couple the vertical post with respect to the horizontal track to adjust an interval, an insert member inserted into the vertical post in the vertical direction, and an outer panel coupled to the vertical post. Thereby, a decorative panel can be attached to the at least one tracks and can be connected to the tracks and detached therefrom by means of a non-positive and/or positive connection, wherein the non-positive and/or positive connection has a first retaining element and a second retaining element of complementary design, wherein the first retaining element is connected to the rear side of the decorative panel in a substance-locking manner or is formed by the latter and the second retaining element is mounted on the tracks in a non-positive and/or positive manner or is formed by the latter.

US 6 226 947 B1 discloses a cladding board mounting system for mounting cladding boards adjacent a surface to be concealed. Each cladding board includes at least one support member on the interior face of the cladding board. The system further includes at least one mounting member which includes an engaging formation adapted for releasable engagement with a complementary engaging formation of a respective support member. The mounting member also includes a second segment for releasable connection to the surface to be concealed. Preferably a mounting bracket extends between the surface to be clad and the mounting member.

GB 2 505 011 A discloses a device for mounting shelves, panels, displays, pictures and the like on a wall or other vertical surface comprises a pair of identical battens or mounts forming a set. In use, one mount is fixed to a wall and one to the article to be hung such that the fixings are not visible from the front face of the article.

US 2016/017595 A1 discloses a hexahedron unit for prefabricated buildings, comprising twelve frames, wherein two frames of adjoining units are fixedly connected by means of a frame joint, wherein the frame joint includes a planar frame joint body, two or more connectors vertically coupled to the frame joint body, and an insertion section connected to an end side of the connector, and wherein the frame includes an elongate bar-type frame body having a hollow rectangular sectional shape with a plurality of internal compartments divided by a plurality of partition walls, and a hollow insertion-space defined in the frame body in a shape corresponding to that of the insertion section of the frame joint body for fitting-engagement with the insertion section.

It is therefore the object of the invention to provide a furnishing item which is improved compared to the prior art.

The underlying object of the present invention is solved by a furnishing item and its use according to the independent claims. The dependent claims represent particularly preferred embodiments of the invention.

A furnishing item according to the present invention comprises a corpus with at least one framing which is made from a plurality of structural profiles to form a frame, wherein a decorative panel can be attached to the at least one framing and can be connected to the framing and detached therefrom by means of a non-positive and/or positive connection, wherein the non-positive and/or positive connection has a first retaining element and a second retaining element of complementary design, wherein the first retaining element is connected to the rear side of the decorative panel in a substance-locking manner or is formed by the latter and the second retaining element is mounted on the framing in a non-positive and/or positive manner or is formed by the latter.

By making the decorative panel detachable from the framing, the furnishing item has almost an unlimited lifespan. If in the course of time it will not anymore seem modern to the user due to its decors or colours or due to the location or living circumstances of the user, it can be interchanged. Due to the modular design of the furnishing item, it can be extended, reduced or completely redesigned with other materials, surfaces, colours and decors at any time. To extend a wardrobe, for example, all the user has to do is to provide another framing for the outer side, move the decorative panel to what is now the outer side, insert the desired objects such as a door or drawers and add or replace the top cover panel.

A further advantage concerns the individualisation of the furnishing item of the present invention. The corpus, defining the substructure of the furniture bears the load of the construction and the inner panelling of the furniture are always kept decoratively neutral. That means that the load bearing part of the corpus is independent of the decor part of the corpus. Thus, the outer decor can be replaced at any time, even after purchase. This offers the user the opportunity to customise his furniture and change it at any time. Top panels, doors, drawer fronts and side panels can be exchanged for other materials and decors as desired.

In the matter of sustainability, the furnishing item according to the present invention is a product that is truly sustainable since it is made to have a very long life and, thus, avoid waste. Each individual part can be replaced by dismounting the decorative panel from the framing or the corpus. Thus, also damaged parts can easily be interchanged for new ones, over and over again. If all individual parts of the furnishing item are made of extremely stable and high-quality components, the life cycle of this furniture is almost unlimited.

According to a preferred embodiment of the present invention, the material-locking connection of the first retaining element to the decorative panel may be an adhesive connection, wherein preferably the adhesive of the adhesive connection is a polyurethane or a silyl modified polymer. Preferably the material-locking connection of the first retaining element to the decorative panel is an adhesive connection.

Preferably the adhesive of the adhesive connection is a two-component adhesive, more preferably a two-component adhesive based on polyurethane, wherein preferably the polyurethane comprising methylene diphenyl diisocyanate (MDI) or hexamethylene diisocyanate (HDI) as isocyanate, the poyol being preferably an amino polyol.

The adhesive can also be a one-component adhesive, preferably the adhesive is a one-component adhesive based on silyl modified polymer.

The adhesive connection can be preferably carried out according to DIN 2304. In this way, particularly strong adhesive bonds can be achieved. The adhesive applied according to this invention is particularly UV-resistant and, therefore, especially suitable for outdoor use. By the above means, the material-locking connection can be carried out to achieve a firm bond and be extremely cost-effective. Furthermore, the thickness of the decorative panel can be relatively thin, thus saving material.

It has been shown that the advantages of the present invention can be at best attained if the tensile strength of the adhesive in the cured state, measured according to DIN EN ISO 527-1, ranges from 1 - 20 N/mm², preferably from 1-15 N/mm², and most preferably from 2 - 10 N/mm². The elongation at break ranges from 10 - 400 %, preferably from 50 - 300 %, and most preferably from 150 - 250 %.

Preferably the bending strength of bonded parts, measured according to DIN EN 12372, is at least 0.5 N/mm², more preferably at least 1 N/mm², even more preferably at least 2 N/mm², whereby the bending strength of bonded parts is not more than 50 N/mm², preferably not more than 20 N/mm². In a preferred embodiment the bending strength of bonded parts is from 0.5 to 50 N/mm², preferably 1 to 20 N/mm², more preferably from 1.5 to 15 N/mm², even more preferably from 1.5 to 10 N/mm², and most preferably from 1.5 to 5 N/mm².

Further preferred the shear strength is from 1 to 15 N/mm², preferably 1.5 to 10 N/mm², and more preferably from 1.5 to 5 N/mm².

Furthermore, preferably the tolerated exposure time to artificial weathering using fluorescent UV lamps and water, measured according to DIN EN 927-6, is at least 500 hours, preferably at least 750 hours, and more preferably at least 1000 hours when using QUV-devices to imitate weathering.

According to the invention, the structural profiles of the furnishing item are provided on one or more of their sides with at least one longitudinal groove, into which a complementarily formed slot nut can be introduced, wherein preferably the slot nut comprises at least one threaded bore (which is perpendicular with its longitudinal axis to the longitudinal axis of the structural profile) and into which a corresponding screw can be introduced in order to releasably clamp the slot nut within the longitudinal groove against the boundary surfaces thereof. Thus, by using standardised structural profiles available to the market, the corpus, i.e. the framing can be provided cost-optimized, since such standard parts like structural profiles and slot nuts are easily obtainable. Thereby, the longitudinal grooves of the structural profiles may have a T-shape or a mushroom shape when viewed in a cross-section perpendicular to the longitudinal axis of the structural profile as can be found at conventional standardised structural profiles.

The construction profiles may be formed from light materials, e.g. aluminium. In a cross-section, these can have a rectangular shape.

According to the invention, for connecting two structural profiles lying directly opposite each other (e.g. the longitudinal grooves lie congruently one above the other), correspondingly two part-slot nuts may be provided which are separably connectable to each other or are formed in one piece with each other. Thereby, the one part-slot nut comprises a preferably rotationally symmetrical head, such as a mushroom head, and an adjoining shaft with a smaller external diameter than that of the head, and the head may be preferably designed in relation to the longitudinal groove in which it is guided in such a manner that it may be freely movable with play in the longitudinal groove along the longitudinal axis of the structural profile, but the play against tilting in the direction away from the longitudinal axis of the structural profile between the contact surfaces of the part-slot nut and the boundary surfaces of the longitudinal groove may be between 0.01 and 0.1 mm, in order to prevent jamming of the part-slot nut during displacement along the longitudinal axis of the structural profile. According to the invention, the part-slot nut comprises a spring-biased ball at its head, the ball being arranged on the side of the head facing away from the shaft, so that when the head is pushed into the longitudinal groove, the ball runs on one of the boundary surfaces of the longitudinal groove of the structural profile for ease of sliding, wherein preferably for adjusting the play against tilting, a spacer sleeve may be provided, which surrounds the shaft and is arranged between the head of the one part-slot nut and the other part-slot nut and may be dimensioned in its length such that the corresponding play of the head against tilting in relation to the boundary surfaces of the longitudinal groove is adjusted accordingly. By these measures, an easy and cost-efficient way to detachably join the construction profiles from standardised slot nuts is possible.

According to an embodiment of the present invention, the corpus of the furnishing item may comprise a plurality of framings arranged at a distance from one another, each framing then preferably forming a side part, a top, a bottom and/or a rear wall of the furnishing item and the framings being connectable to one another by means of structural profiles and slot nuts. So, many different forms of parallelepipedal corpuses can be achieved with the present invention.

If the first and second retaining elements are identical to one another and are designed as profile strips, which may have a C-, a L- or a Z-shape in cross-section. Thus, a cost-effective non-positive and/or positive connection of the framing with the decorative panel can be achieved.

It is furthermore an advantage of the present invention if the width of the profile strip is between 2 and 4 cm. Thus, even cost-efficient standardised profiles can be used to form the non-positive and/or positive connection.

According to another embodiment of the present invention, the decorative panel may at least be partially made of a stone, such as natural stone, fireclay stone or quartz composite stone, of ceramic, such as clay ceramic or glass ceramic, glass, such as mirror glass or tempered glass, a metal, such as aluminium, brass or stainless steel, a plastic, such as acrylic, wood, a high-pressure laminate (HPL), a coated MDF or chipboard, a composite material of aluminium and plastic or combinations of the aforementioned materials. This may have especially advantages on the building biology of the furnishing item. All construction parts of the corpus (structural profiles) can be made of aluminium and the connecting parts (slot nuts, part-slot nuts) can be ade of aluminium or metal, too. Aluminium has a recycling rate of over 95%. Ceramics consist of materials (glass and quartz particles) that come from nature and can also be completely recycled. Especially these substances, do not have high proportions of binding agents (bonding of pressboard) or varnishes, which could possibly release pollutants into the air we breathe through diffusion or cause problems in disposal like this is the fact in chipboards and many more.

According to another embodiment of the furnishing item according to the present invention, the decorative panel may have a thickness of 3 to 20 mm, preferably 4 to 12 mm. Such, in particular thin materials can be used as decorative panels. Thus, the amount of material and the weight of such a furnishing item can be reduced.

The present invention also concerns the use of such an inventive furnishing item as a facing wall or furniture for interior use, such as a cupboard, shelf, in particular for living rooms such as sitting rooms, kitchens or bathrooms or business premises such as offices.

Further, the present invention concerns the use of a furnishing item as a storage space for accommodating vehicles, equipment, goods and materials or as furniture for outdoor use, such as an outdoor kitchen.

The invention will now be described in more detail by means of embodiments and the figures.

Shown are:
- Fig. 1a, 1b:: a spatial view from the front and the back of a furnishing item according to an embodiment of the invention;
- Fig. 1c:: a detail of a spatial view from the back of a part of the furnishing item according to Fig. 1a and 1b;
- Fig. 2:: a spatial view from the back and a side view of the decorative panel from Fig. 1a to 1c;
- Fig. 3:: a side view on the decorative panel being fixed to the framing, as seen in Fig. 1a to 1c;
- Fig. 4a:: a spatial view towards a furnishing item being assembled according to another embodiment of the invention;
- Fig. 4b:: a spatial view on the readily assembled furnishing item from Fig. 4a;
- Fig. 5a, 5b:: a spatial view and side view of a part-nut slot used according to the present invention;
- Fig. 6:: a spatial view of a structural profile;
- Fig. 7:: a spatial view of a detail of a first embodiment of an end bar;
- Fig. 8:: a spatial view of a detail of a second embodiment of an end bar.

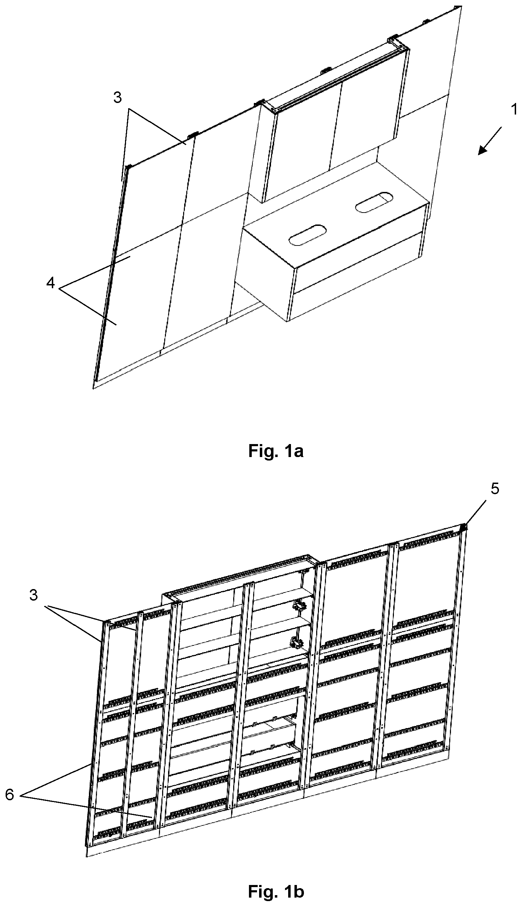

Figs. 1a to 1c each show a spatial view of a possible embodiment of the inventive furnishing item. In the illustration according to Fig. 1a, the furnishing item 1 is a combination of a wall and individual furniture elements, in this case a bathroom cabinet with a wash basin and a mirror cabinet. From the backside, as can best be seen from Fig. 1b, one can see that the furnishing item comprises a corpus 2 which is made of a plurality of framings 3. Each framing 3 thereby forms a rectangular frame. To the framing 3 a decorative panel 4 can be mounted. It can be seen from Fig. 1b that the decorative panels 4 that form the part of the wall of the furnishing item which surrounds the bathroom cabinet and the mirror cabinet are suspended upon the framing 3 by a non-positive and/or positive connection 5.

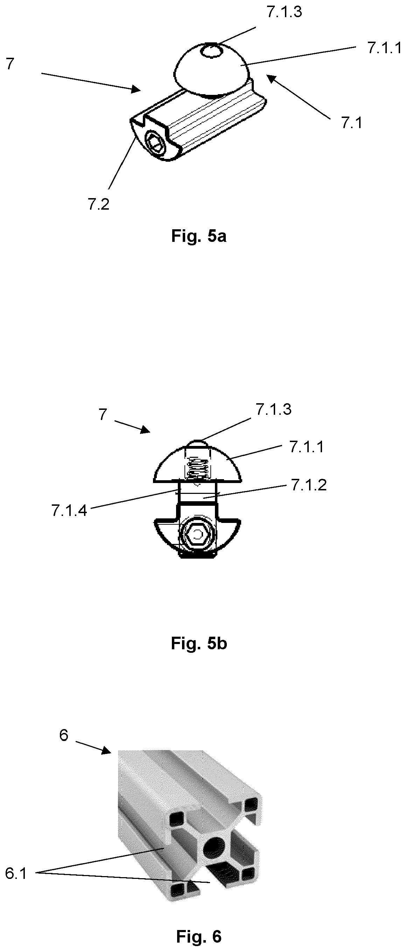

The framings 3 can be made of conventional structural profiles 6, of which one is shown in Fig. 6.

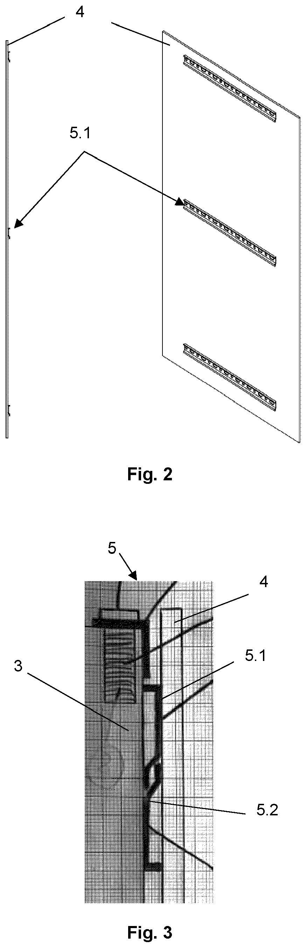

The non-positive and/or positive connection 5 can best be seen from Fig. 2. Thereby, e.g. the first retaining element 5.1 is arranged on the rear side of the decorative panel 4 and the second retaining element 5.2 is arranged on the framing 3 or is made in one piece with the framing 3. The first and second retaining elements 5.1, 5.2 are made identical to one another and are designed as profile strips. In this case, they have a C-shape in cross-section (see Fig. 3). These profile strips are e.g. glued in a substance-locking manner to the rear side of the decorative panel 4 or even can be formed monolithic with the rear side of the decorative panel 4. Both retaining elements 5.1, 5.2 can engage with each other such that the decorative panel 4 can be suspended removably on the framing 3. To insert the decorative panel 4 on to the framing 3, it is hooked into the framing 3 from above and it holds due to its weight force, as disclosed in Fig. 3 by the non-positive and/or positive connection 5. To remove it from the framing 3, it is taken off at the top. Such, the first and second retaining elements 5.1, 5.2 are separated from each other and the non-positive and/or positive connection 5 is opened.

As can be seen, the non-positive and/or positive connection 5 is designed such that the decorative panel 4 can be connected to the framing 3 and detached therefrom without using a tool.

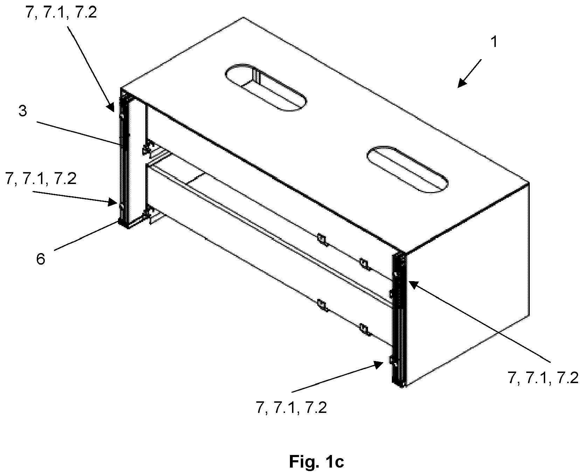

The same is true for the bathroom cabinet as shown in Fig. 1c. Here, the decorative panels 4 for the side walls of the bathroom cabinet can also be detached from the framing 3.

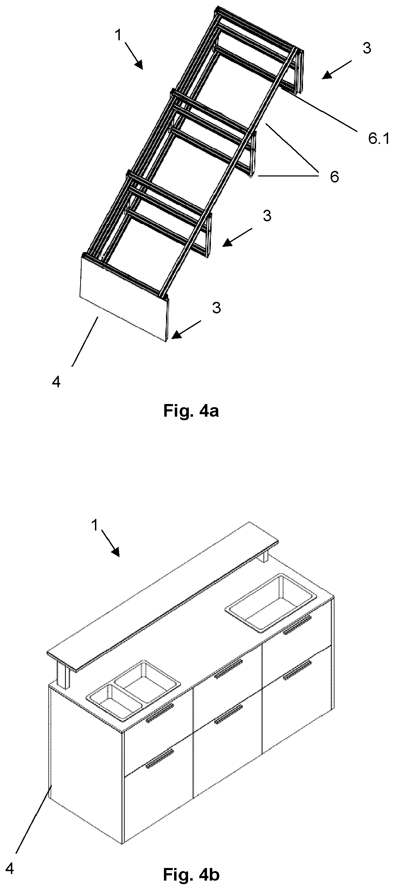

Fig. 4a and 4b show a spatial view of a furnishing item 1 being assembled according to another embodiment of the invention. It can be seen, that the corpus 2 comprises a plurality of framings 3 which are arranged at a distance from one another. Each framing 3 can preferably form a side part, a top, a bottom and/or a rear wall of the furnishing item 1. All of the framings 3 are made of structural profiles 6. These structural profiles 6 are provided on one or more of their sides with at least one longitudinal groove 6.1 (see Fig. 6), into which a complementarily formed slot nut 7 (see Fig. 5a and 5b) can be introduced. By this way, individual framings 3 can be detachably joined together by the use of further structural profiles 6 and slot nuts 7.

Fig. 5a shows a spatial view and Fig. 5b a side view of a respective slot nut 7 which is separated in two part-slot nuts 7.1, 7.2. It can be seen, that the both part-slots nut 7.1, 7.2 comprise a T-shape or a mushroom shape in cross-section to the longitudinal axis of the structural profile 6 and that shape is complementary to the profile of the longitudinal groove of the structural profile 6.

Normally, the slot nuts 7 may comprises at least one threaded bore and into which a corresponding screw can be introduced in order to releasably clamp the slot nut 7 within the longitudinal groove 6.1 against the boundary surfaces thereof.

The part-slot nut 7.1 comprises a rotationally symmetrical head 7.1.1, such as a mushroom head, and an adjoining shaft 7.1.2 with a smaller external diameter than that of the head 7.1.1. Thereby, the head 7.1.1 is designed such in relation to the longitudinal groove 6.1 of the structural profile 6, in which it is guided, that it is freely movable with play in the longitudinal groove 6.1 along the longitudinal axis of the structural profile 6. However, the play is chosen such that a tilting in the direction away from the longitudinal axis of the structural profile 6 between the contact surfaces of the part-slot nut 7.1, 7.2 and the boundary surfaces of the longitudinal groove 6.1 is between 0.01 and 0.1 mm. By this measure, a jamming of the part-slot nut 7.1, 7.2 during displacement along the longitudinal axis of the structural profile 6 is prevented. Thus, the slot nut 7, especially the part-slot nut 7.1, 7.2 can easily be positioned on the desired position along the longitudinal groove 6.1. However, the play against tilting can also be easily adjusted, respectively, by the use of, a spacer sleeve 7.1.4. It surrounds the shaft 7.1.2 and is arranged between the head 7.1.1 of the one part-slot nut 7.1 and the other part-slot nut 7.2. The spacer sleeve 7.1.4 can be dimensioned in its length such that the corresponding play of the head 7.1.1 against tilting in relation to the boundary surfaces of the longitudinal groove 6.1 is adjusted accordingly.

In this way, with the part-slot nuts 7.1, 7.2, two structural profiles 6 lying directly opposite each other, e.g. the longitudinal grooves 6.1 lying congruently one above the other, can be connected to each other. Thereby, the two part-slot nuts 7.1, 7.2 can be designed such that they are separably connected to each other or are formed in one piece with each other.

For reducing friction while moving the slot nut 7 within the longitudinal groove 6.1 of the structural profile 6, the part-slot nut 7.1 may have a spring-biased ball 7.1.3 at its head 7.1.1, the ball 7.1.3 being arranged on the side of the head facing away from the shaft 7.1.2, so that when the head 7.1.1 is pushed into the longitudinal groove, the ball 7.1.3 runs on the structural profile 6, in detail on one of the (inner) boundary surfaces of the longitudinal groove 6.1 for ease of sliding.

Having a view on Fig. 1c, there are also provided such part-slot nuts 7.1, 7.2 at each framing 3. With these part-slot nuts 7.1, 7.2, the bathroom cabinet may be easily attached to the wall shown in Fig. 1a and 1b.

With regard to Fig. 4a, the multiple framings 3, which are in this case parallel to each other, are also formed by a plurality of structural profiles 6 by connecting them with slot nuts 7. This construction forms the corpus 2 of the furnishing item, in this case being an outdoor kitchen. The outdoor kitchen may have shelves and a sink. At least the both sides of the outdoor kitchen as well as the rear side thereof may be provided with an exchangeable decorative panel 4 as disclosed in the foregoing Figs.

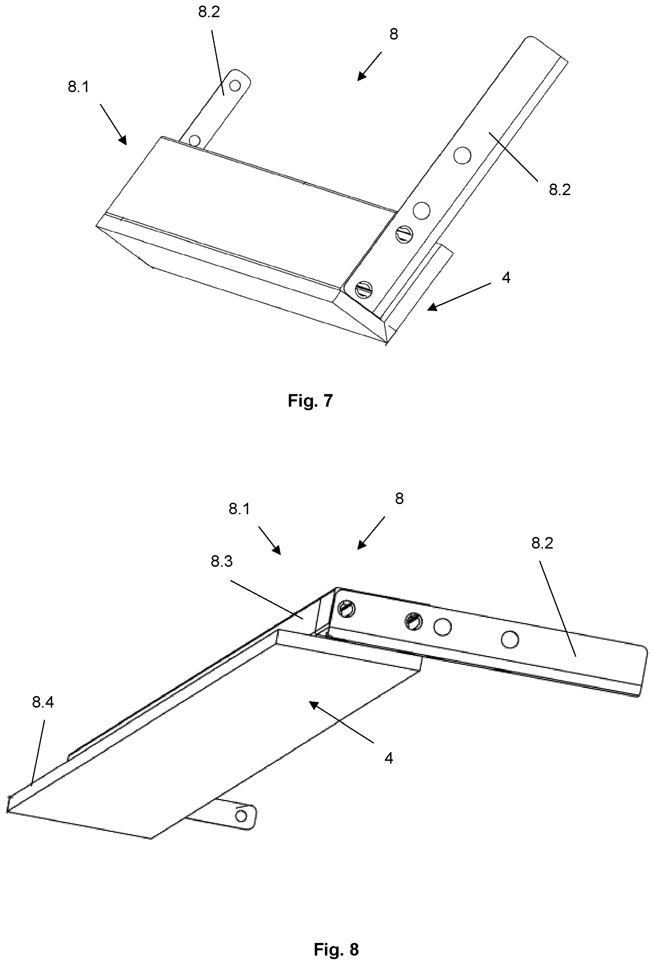

Fig. 7 and 8 each disclose a spatial view of a detail of an embodiment of an end bar 8 of the modular system. Each end bar 8 comprises a base 8.1 and two thighs 8.2 as ledges. With these two thighs 8.2, the end bar 8 can be inserted into the framing 3, such that the two thighs 8.2 can be in contact and thus guided on the framing 3. After insertion the base can be flush and clear of play with the decorative panel 4. Therefore, the base can be at least partly made of the same material as the decorative panel 4 is made or can have such a decorative panel 4 fitted to the base 8.1. Further, the base can have a shoulder 8.3, which is hidden behind the leading edge 8.4 of the decorative panel 4 on which a light source, like a LED stripe can be fixed. Such, an indirect source of light can be included in the furnishing item.

According to the present invention, the furnishing item is a modular system of furniture with high flexibility in arrangement and sustainability. In all the above-mentioned areas, it is possible to create wall, floor and furniture surfaces from the same materials and thus optimally match them to each other, all from a single source, all with one and the same decor, if required.

The use of structural profiles 6 as internal struts enables the attachment of drawer runners, door hinges and shelf supports. If used in walls, additionally to the decorative effect, the use of a framing 3 also has the advantage of a "ventilated" facade. At the same time, installations can be integrated behind that wall. Shelving boards can also be changed if desired since they are only hooked into the wall without tools.

### Reference signs

- 1: furnishing item
- 2: corpus
- 3: framing
- 4: decorative panel
- 5: non-positive and/or positive connection
- 5.1: first retaining element
- 5.2: second retaining element
- 6: structural profiles
- 6.1: longitudinal groove
- 7: slot nuts
- 7.1: part-slot nut
- 7.2: part-slot nut
- 7.1.1: head
- 7.1.2: shaft
- 7.1.3: ball
- 7.1.4: spacer sleeve
- 8: end bar
- 8.1: base
- 8.2: thigh
- 8.3: shoulder
- 8.4: leading edge

## Claims

1. Furnishing item (1), comprising a corpus (2) with at least one framing (3) which is made from a plurality of structural profiles (6) to form a frame, wherein a decorative panel can be attached to the at least one framing (3) and can be connected to the framing (3) and detached therefrom by means of a non-positive and/or positive connection (5), wherein the non-positive and/or positive connection (5) has a first retaining element (5.1) and a second retaining element (5.2) of complementary design, wherein the first retaining element (5.1) is connected to the rear side of the decorative panel (4) in a substance-locking manner or is formed by the latter and the second retaining element (5.2) is mounted on the framing (3) in a non-positive and/or positive manner or is formed by the latter, wherein the structural profiles (6) are provided on one or more of their sides with at least one longitudinal groove (6.1), into which a complementarily formed slot nut (7) can be introduced, wherein preferably the slot nut (7) comprises at least one threaded bore and into which a corresponding screw can be introduced in order to releasably clamp the slot nut (7) within the longitudinal groove (6.1) against the boundary surfaces thereof, wherein for connecting two structural profiles (6) lying directly opposite each other, correspondingly two part-slot nuts (7.1, 7.2) are provided which are separably connected to each other or are formed in one piece with each other, wherein one of said part-slot nuts (7.1) comprises a preferably rotationally symmetrical head (7.1.1), such as a mushroom head, and an adjoining shaft (7.1.2) with a smaller external diameter than that of the head (7.1.1), and the head is preferably designed in relation to the longitudinal groove (6.1) in which it is guided in such a manner that it is freely movable with play in the longitudinal groove (6.1) along the longitudinal axis of the structural profile (6), but the play against tilting in the direction away from the longitudinal axis of the structural profile (6) between the contact surfaces of the one part-slot nut (7.1) and the boundary surfaces of the longitudinal groove (6.1) is between 0.01 and 0.1 mm, in order to prevent jamming of the one part-slot nut (7.1) during displacement along the longitudinal axis of the structural profile (6), **characterized in that** the one part-slot nut (7.1) has a spring-biased ball (7.1.3) at its head, the ball (7.1.3) being arranged on the side of the head (7.1.1) facing away from the shaft (7.1.2), so that when the head (7.1.1) is pushed into the longitudinal groove (6.1), the ball (7.1.3) runs on one of the boundary surfaces of the longitudinal groove (6.1) for ease of sliding, and preferably **in that** for adjusting the play against tilting, a spacer sleeve (7.1.4) is provided, which surrounds the shaft (7.1.2) and is arranged between the head (7.1.1) of the one part-slot nut (7.1) and the other part-slot nut (7.2) and is dimensioned in its length such that the corresponding play of the head (7.1.1) against tilting in relation to the boundary surfaces of the longitudinal groove (6.1) is adjusted accordingly.

2. Furnishing item (1) according to claim 1, **characterised in that** the material-locking connection of the first retaining element (5.1) to the decorative panel (4) is an adhesive connection, the adhesive connection being preferably carried out according to DIN 2304, wherein the adhesive of the adhesive connection is preferably a two-component adhesive, more preferably a two-component adhesive based on polyurethane, wherein preferably the polyurethane comprising methylene diphenyl diisocyanate (MDI) or hexamethylene diisocyanate (HDI) as isocyanate, the poyol being preferably an amino polyol.

3. Furnishing item (1) according to claim 1or 2, **characterized in that** the bending strength of bonded parts, measured according to DIN EN 12372, is at least 0.5 N/mm², and more preferably at least 2 N/mm²; and/or
the shear strength is from 1 to 15 N/mm², preferably 1.5 to 10 N/mm², and more preferably from 1.5 to 5 N/mm²; and/or
the tolerated exposure time to artificial weathering using fluorescent UV lamps and water, measured according to DIN EN 927-6, is at least 500 hours, and more preferably at least 750 hours.

4. Furnishing item (1) according to any claim 1, **characterised in that** the longitudinal groove (6.1) of the structural profile has a T-shape or a mushroom shape when viewed in a cross-section perpendicular to the longitudinal axis of the structural profile (6).

5. Furnishing item (1) according to one of the preceding claims, **characterised in that** the corpus (2) comprises a plurality of framings (3) arranged at a distance from one another, each framing (3) then preferably forming a side part, a top, a bottom and/or a rear wall of the furnishing item (1) and the framings (3) being connectable to one another by means of structural profiles (6) profiles and slot nuts (7).

6. Furnishing item (1) according to one of the preceding claims, **characterised in that** the first and second retaining elements (5.1, 5.2) are identical to one another and are designed as profile strips, which have a C-, a L- or a Z-shape in cross-section.

7. Furnishing item (1) according to claim 6, **characterised in that** the width of the profile strip is between 2 and 4 cm.

8. Furnishing item (1) according to one of the preceding claims, **characterised in that** the decorative panel (4) is at least partially made of a stone, such as natural stone, fireclay stone or quartz composite stone, of ceramic, such as clay ceramic or glass ceramic, glass, such as mirror glass or tempered glass, a metal, such as aluminium, brass or stainless steel, a plastic, such as acrylic, wood, a high-pressure laminate (HPL), a coated MDF or chipboard, a composite material of aluminium and plastic or combinations of the aforementioned materials.

9. Furnishing item (1) according to claim 8, **characterised in that** the decorative panel (4) has a thickness of 3 to 20 mm, preferably 4 to 12 mm.

10. Use of a furnishing item (1) according to any one of claims 1 to 9 as a facing wall or furniture for interior use, such as a cupboard, shelf, in particular for living rooms such as sitting rooms, kitchens or bathrooms or business premises such as offices.

11. Use of a furnishing item (1) according to any one of claims 1 to 9 as a storage space for accommodating vehicles, equipment, goods and materials or as furniture for outdoor use, such as an outdoor kitchen.

## Patentansprüche

1. Einrichtungsgegenstand (1), umfassend einen Korpus (2) mit mindestens einem Rahmen (3), der aus einer Vielzahl von Strukturprofilen (6) zu einem Rahmen zusammengesetzt ist, wobei an dem mindestens einen Rahmen (3) ein Dekorpaneel befestigbar und mittels einer kraft- und/oder formschlüssigen Verbindung (5) mit dem Rahmen (3) verbindbar und von diesem lösbar ist, wobei die kraft- und/oder formschlüssige Verbindung (5) ein erstes Rückhalteelement (5.1) und ein zweites, komplementär ausgebildetes Rückhalteelement (5.2) aufweist, wobei das erste Rückhalteelement (5.1) substanzschlüssig mit der Rückseite des Dekorpaneels (4) verbunden ist oder von diesem gebildet wird und das zweite Rückhalteelement (5.2) kraft- und/oder formschlüssig am Rahmen (3) angebracht ist oder von diesem gebildet wird, wobei die Strukturprofile (6) an einer oder mehrerer ihrer Seiten mit mindestens einer Längsnut (6.1) versehen sind, in die ein komplementär ausgebildeter Nutenstein (7) einbringbar ist, wobei vorzugsweise der Nutenstein (7) mindestens eine Gewindebohrung umfasst und in die eine entsprechende Schraube einbringbar ist, um den Nutenstein (7) innerhalb der Längsnut (6.1) gegen deren Begrenzungsflächen lösbar zu klemmen, wobei zum Verbinden zweier sich unmittelbar gegenüberliegender Strukturprofile (6) entsprechend zwei Teilnutensteine (7.1, 7.2) bereitgestellt sind, die lösbar miteinander verbunden oder einstückig miteinander ausgebildet sind, wobei einer der Teilnutensteine (7.1) einen vorzugsweise rotationssymmetrischen Kopf (7.1.1), wie einen Pilzkopf, und einen anschließenden Schaft (7.1.2) mit kleinerem Außendurchmesser als dem des Kopfes (7.1.1) umfasst, und der Kopf vorzugsweise in Bezug auf die Längsnut (6.1), in der er geführt ist, so ausgebildet ist, dass er mit Spiel in der Längsnut (6.1) entlang der Längsachse des Strukturprofils (6) frei beweglich ist, wobei das Spiel gegen Verkippen in Richtung weg von der Längsachse des Strukturprofils (6) zwischen den Kontaktflächen des einen Teilnutensteins (7.1) und den Begrenzungsflächen der Längsnut (6.1) zwischen 0,01 und 0,1 mm beträgt, um ein Verklemmen des einteiligen Nutensteins (7.1) beim Verschieben entlang der Längsachse des Strukturprofils (6) zu verhindern, **dadurch gekennzeichnet, dass** der eine Teilnutenstein (7.1) an seinem Kopf eine federbelastete Kugel (7.1.3) aufweist, wobei die Kugel (7.1.3) auf der von dem Schaft (7.1.2) abgewandten Seite des Kopfes (7.1.1) angeordnet ist, sodass, wenn der Kopf (7.1.1) in die Längsnut (6.1) eingeschoben wird, die Kugel (7.1.3) auf einer der Begrenzungsflächen der Längsnut (6.1) gleitet, und vorzugsweise dadurch, dass zum Einstellen des Spiels gegen Verkippen eine Distanzhülse (7.1.4) bereitgestellt wird, die den Schaft (7.1.2) umgibt und zwischen dem Kopf (7.1.1) des einen Teilnutensteins (7.1) und dem anderen Teilnutenstein (7.2) angeordnet und in ihrer Länge so bemessen ist, dass das entsprechende Spiel des Kopfes (7.1.1) gegen Verkippen in Bezug auf die Begrenzungsflächen der Längsnut (6.1) entsprechend eingestellt wird.

2. Einrichtungsgegenstand (1) nach Anspruch 1, **dadurch gekennzeichnet, dass** die materialschlüssige Verbindung des ersten Rückhalteelements (5.1) mit dem Dekorpaneel eine Klebeverbindung ist, wobei die Klebeverbindung vorzugsweise nach DIN 2304 ausgeführt ist, wobei der Kleber der Klebeverbindung vorzugsweise ein Zweikomponentenkleber, bevorzugt ein Zweikomponentenkleber auf Basis von Polyurethan ist, wobei vorzugsweise das Polyurethan Methylendiphenyl-Diisocyanat (MDI) oder Hexamethylen-Diisocyanat (HDI) als Isocyanat umfasst, wobei das Polyol vorzugsweise ein Aminopolyol ist.

3. Einrichtungsgegenstand (1) nach Anspruch 1 oder 2, **dadurch gekennzeichnet, dass** die Biegefestigkeit der verklebten Teile, gemessen nach DIN EN 12372, mindestens 0,5 N/mm² und vorzugsweise mindestens 2 N/mm² beträgt; und/oder
die Scherfestigkeit 1 bis 15 N/mm², vorzugsweise 1,5 bis 10 N/mm²und besonders bevorzugt 1,5 bis 5 N/mm² beträgt; und/oder die tolerierte Belichtungsdauer bei künstlicher Bewitterung mit fluoreszierenden UV-Lampen und Wasser, gemessen nach DIN EN 927-6, mindestens 500 Stunden, vorzugsweise mindestens 750 Stunden beträgt.

4. Einrichtungsgegenstand (1) nach einem der Ansprüche 1, **dadurch gekennzeichnet, dass** die Längsnut (6.1) des Strukturprofils im Querschnitt senkrecht zur Längsachse des Strukturprofils (6) gesehen eine T-Form oder eine Pilzform aufweist.

5. Einrichtungsgegenstand (1) nach einem der vorhergehenden Ansprüche, **dadurch gekennzeichnet, dass** der Korpus (2) eine Vielzahl von Rahmen (3) umfasst, die in einem Abstand zueinander angeordnet ist, wobei jeder Rahmen (3) dann vorzugsweise ein Seitenteil, eine Oberseite, einen Boden und/oder eine Rückwand des Einrichtungsgegenstandes (1) bildet und die Rahmen (3) mittels Strukturprofilen (6) und Nutensteinen (7) miteinander verbindbar sind.

6. Einrichtungsgegenstand (1) nach einem der vorhergehenden Ansprüche, **dadurch gekennzeichnet, dass** das erste und zweite Rückhalteelement (5.1, 5.2) miteinander identisch sind und als Profilleisten ausgebildet sind, die im Querschnitt eine C-, eine L- oder eine Z-Form aufweisen.

7. Einrichtungsgegenstand (1) nach Anspruch 6, **dadurch gekennzeichnet, dass** die Breite des Profilstreifens zwischen 2 und 4 cm beträgt.

8. Einrichtungsgegenstand (1) nach einem der vorhergehenden Ansprüche, **dadurch gekennzeichnet, dass** das Dekorpaneel (4) mindestens teilweise aus einem Stein, wie Naturstein, Schamottstein oder Quarzkompositstein, aus Keramik, wie Tonkeramik oder Glaskeramik, aus Glas, wie Spiegelglas oder gehärtetem Glas, aus einem Metall, wie Aluminium, Messing oder Edelstahl, aus einem Kunststoff, wie Acryl, aus Holz, aus einem Hochdrucklaminat (HPL), aus einer beschichteten MDF- oder Spanplatte, aus einem Verbundmaterial aus Aluminium und Kunststoff oder aus Kombinationen der vorgenannten Materialien besteht.

9. Einrichtungsgegenstand (1) nach Anspruch 8, **dadurch gekennzeichnet, dass** das Dekorpaneel (4) eine Dicke von 3 bis 20 mm, vorzugsweise 4 bis 12 mm, aufweist.

10. Verwendung eines Einrichtungsgegenstandes (1) nach einem der Ansprüche 1 bis 9 als Wandverkleidung oder Möbel für den Innenbereich, wie Schrank, Regal, insbesondere für Wohnräume wie Wohnzimmer, Küchen oder Bäder oder Geschäftsräume wie Büros.

11. Verwendung eines Einrichtungsgegenstandes (1) nach einem der Ansprüche 1 bis 9 als Stauraum zur Unterbringung von Fahrzeugen, Geräten, Waren und Materialien oder als Möbel für den Außenbereich, wie eine Außenküche.

## Revendications

1. Article d'ameublement (1), comprenant un corps (2) avec au moins un encadrement (3) qui est constitué d'une pluralité de profilés structurels (6) pour former un cadre, dans lequel un panneau décoratif peut être fixé à l'au moins un encadrement (3) et peut être relié à l'encadrement (3) et détaché de celui-ci au moyen d'une liaison non positive et/ou positive (5), dans lequel la liaison non positive et/ou positive (5) présente un premier élément de retenue (5.1) et un second élément de retenue (5.2) de conception complémentaire, dans lequel le premier élément de retenue (5.1) est relié par verrouillage de substance au côté arrière du panneau décoratif (4) ou est formé par ce dernier et le second élément de retenue (5.2) est monté de manière non positive et/ou positive sur l'encadrement (3) ou est formé par celui-ci, dans lequel les profilés structurels (6) sont pourvus sur un ou plusieurs de leurs côtés d'au moins une rainure longitudinale (6.1), dans laquelle un écrou à fente (7) de forme complémentaire peut être introduit, dans lequel l'écrou à fente (7) comprend de préférence au moins un alésage fileté et dans lequel une vis correspondante peut être introduite afin de serrer de manière amovible l'écrou à fente (7) à l'intérieur de la rainure longitudinale (6.1) contre les surfaces limites de celle-ci, dans lequel pour relier deux profilés structurels (6) directement opposés l'un à l'autre, il est prévu en conséquence deux écrous à fente partielle (7.1, 7.2) qui sont reliés de manière séparable l'un à l'autre ou sont formés en une seule pièce l'un avec l'autre, dans lequel l'un desdits écrous à fente partielle (7.1) comprend une tête (7.1.1) de préférence à symétrie de rotation, telle qu'une tête de champignon, et un arbre adjacent (7.1.2) avec un diamètre extérieur plus petit que celui de la tête (7.1.1), et la tête est de préférence conçue par rapport à la rainure longitudinale (6.1) dans laquelle elle est guidée de manière à pouvoir se déplacer librement avec un jeu dans la rainure longitudinale (6.1) le long de l'axe longitudinal du profilé structurel (6), mais le jeu contre le basculement dans la direction opposée à l'axe longitudinal du profilé structurel (6), entre les surfaces de contact de l'écrou à fente partielle (7.1) et les surfaces limites de la rainure longitudinale (6.1), est compris entre 0,01 et 0,1 mm, afin d'éviter le coincement de l'écrou à fente partielle (7.1) lors du déplacement le long de l'axe longitudinal du profilé structurel (6), **caractérisé en ce que** l'écrou à fente partielle (7.1) comporte au niveau de sa tête une bille sollicitée par un ressort (7.1.3), la bille (7.1.3) étant disposée du côté de la tête (7.1.1) opposé à l'arbre (7.1.2), de sorte que lorsque la tête (7.1.1) est poussée dans la rainure longitudinale (6.1), la bille (7.1.3) court sur l'une des surfaces limites de la rainure longitudinale (6.1) pour faciliter le coulissement, et de préférence **en ce que** pour régler le jeu contre le basculement, il est prévu une douille d'écartement (7.1.4) qui entoure l'arbre (7.1.2) et est disposée entre la tête (7.1.1) de l'écrou à fente partielle (7.1) et l'autre écrou à fente partielle (7.2) et est dimensionnée dans sa longueur de telle sorte que le jeu correspondant de la tête (7.1.1) contre le basculement par rapport aux surfaces limites de la rainure longitudinale (6.1) soit réglé en conséquence.

2. Article d'ameublement (1) selon la revendication 1, **caractérisé en ce que** la liaison par verrouillage de matériau du premier élément de retenue (5.1) avec le panneau décoratif (4) est une liaison adhésive, la liaison adhésive étant réalisée de préférence selon la norme DIN 2304, dans lequel l'adhésif de la liaison adhésive est de préférence un adhésif à deux composants, de manière davantage préférée un adhésif à deux composants à base de polyuréthane, dans lequel le polyuréthane comprend de préférence du diisocyanate de méthylène diphényle (MDI) ou du diisocyanate d'hexaméthylène (HDI) comme isocyanate, le poyol étant de préférence un aminopolyol.

3. Article d'ameublement (1) selon la revendication 1 ou 2, **caractérisé en ce que** la résistance à la flexion des parties collées, mesurée selon la norme DIN EN 12372, est d'au moins 0,5 N/mm², et de manière davantage préférée d'au moins 2 N/mm² ; et/ou
la résistance au cisaillement est de 1 à 15 N/mm², de préférence de 1,5 à 10 N/mm², et de manière davantage préférée de 1,5 à 5 N/mm² ; et/ou
la durée d'exposition tolérée aux intempéries artificielles à l'aide de lampes UV fluorescentes et d'eau, mesurée selon la norme DIN EN 927-6, est d'au moins 500 heures, et de manière davantage préférée d'au moins 750 heures.

4. Article d'ameublement (1) selon une quelconque revendication 1, **caractérisé en ce que** la rainure longitudinale (6.1) du profilé structurel a une forme en T ou en forme de champignon lorsqu'on la regarde dans une coupe transversale perpendiculaire à l'axe longitudinal du profilé structurel (6).

5. Article d'ameublement (1) selon l'une des revendications précédentes, **caractérisé en ce que** le corps (2) comprend une pluralité d'encadrements (3) disposés à distance les uns des autres, chaque encadrement (3) formant alors de préférence une partie latérale, une partie supérieure, une partie inférieure et/ou une paroi arrière de l'article d'ameublement (1) et les encadrements (3) pouvant être reliés les uns aux autres au moyen de profilés structurels (6), de profilés et d'écrous à fente (7).

6. Article d'ameublement (1) selon l'une des revendications précédentes, **caractérisé en ce que** les premier et second éléments de retenue (5.1, 5.2) sont identiques entre eux et sont conçus sous forme de bandes profilées qui présentent une forme en C, en L ou en Z en section transversale.

7. Article d'ameublement (1) selon la revendication 6, **caractérisé en ce que** la largeur de la bande profilée est comprise entre 2 et 4 cm.

8. Article d'ameublement (1) selon l'une des revendications précédentes, **caractérisé en ce que** le panneau décoratif (4) est au moins partiellement constitué d'une pierre, telle qu'une pierre naturelle, une pierre d'argile réfractaire ou une pierre composite de quartz, de céramique, telle que la céramique d'argile ou la vitrocéramique, de verre, tel que le verre miroir ou le verre trempé, d'un métal, tel que l'aluminium, le laiton ou l'acier inoxydable, d'un plastique, tel que l'acrylique, de bois, d'un stratifié haute pression (HPL), d'un MDF revêtu ou de panneaux de particules, d'un matériau composite d'aluminium et de plastique ou de combinaisons des matériaux susmentionnés.

9. Article d'ameublement (1) selon la revendication 8, **caractérisé en ce que** le panneau décoratif (4) a une épaisseur de 3 à 20 mm, de préférence de 4 à 12 mm.

10. Utilisation d'un article d'ameublement (1) selon l'une quelconque des revendications 1 à 9 comme une paroi de parement ou un meuble à usage intérieur, tel qu'une armoire, une étagère, notamment pour des pièces à vivre telles que des salons, des cuisines ou des salles de bains ou des locaux professionnels comme des bureaux.

11. Utilisation d'un article d'ameublement (1) selon l'une quelconque des revendications 1 à 9 comme espace de stockage pour accueillir des véhicules, des équipements, des marchandises et des matériaux ou comme meuble à usage extérieur, tel qu'une cuisine extérieure.
